(19) Europäisches Patentamt
European Patent Office
Office européen des brevets

(11) Veröffentlichungsnummer : **0 109 637**
**B1**

(12) # EUROPÄISCHE PATENTSCHRIFT

(45) Veröffentlichungstag der Patentschrift : **21.10.87**

(51) Int. Cl.⁴ : **C 08 G 75/02**

(21) Anmeldenummer : **83111349.3**

(22) Anmeldetag : **14.11.83**

(54) **Verfahren zur Herstellung von hochmolekularen gegebenenfalls verzweigten Polyarylensulfiden.**

(30) Priorität : **23.11.82 DE 3243189**

(43) Veröffentlichungstag der Anmeldung : **30.05.84 Patentblatt 84/22**

(45) Bekanntmachung des Hinweises auf die Patenterteilung : **21.10.87 Patentblatt 87/43**

(84) Benannte Vertragsstaaten : **DE FR GB IT**

(56) Entgegenhaltungen :
**EP-A- 0 023 313**
**EP-A- 0 065 689**
**EP-A- 0 086 486**
**DE-A- 3 030 488**
**US-A- 3 354 129**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Ostlinning, Edgar, Dr.**
**Rembrandtstrasse 37**
**D-4000 Düsseldorf (DE)**
Erfinder : **Idel, Karsten, Dr.**
**Scheiblerstrasse 81**
**D-4150 Krefeld (DE)**

**EP 0 109 637 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist ein Verfahren zur Herstellung von hochmolekularen, gegebenenfalls verzweigten Polyarylensulfiden. Diese können in einem polaren organischen Lösungsmittel in Abwesenheit von Wasser in einer Eintopfreaktion hergestellt werden.

Polyarylensulfide und ihre Herstellung sind bekannt (siehe beispielsweise US-PS 2 513 188, 3 117 620, 3 354 129, 3 524 835, 3 790 536, 3 839 301, 4 048 259, 4 038 260, 4 038 261, 4 038 262, 4 056 515, 4 060 520, 4 064 114, DE-AS 2 453 485, 2 453 749, DE-OS 4 116 947, 2 623 362, 4 282 347, 2 623 363, 2 623 333, 2 930 797, 2 930 710, 3 019 732, 3 030 488).

All diese Verfahren setzen Ausgangsstoffe ein, die vor der Umsetzung zu Polyarylensulfiden in einem extra Reaktionsschritt zumindest teilweise entwässert werden müssen.

So werden z. B. im Verfahren der DE-OS 3 030 488 Alkalisulfide eingesetzt, die einen Wassergehalt von 1 bis 2,4 Mol Wasser pro Mol Alkalisulfid haben. Gemäß den US-Patenten 4 056 515 und 4 060 520 verbleiben in den Reaktionsgemischen nach der Vorentwässerung Wassergehalte von 1 Mol pro Mol S-Spender und mehr. In der US-PS 4 282 347 wird nach dem Entwässerungsschritt Wasser zum Reaktionsgemisch gegeben, um einen bestimmten Wassergehalt einzustellen. Aus der EP-A 0 023 313 ist bekannt, vor der Polymerisation das Wasser mindestens größtenteils zu entfernen.

Als besonders vorteilhaft wird es bei all diesen Verfahren angesehen, daß bei der Entwässerung nicht alle Reaktionspartner anwesend sind. Insbesondere werden die Halogenaromaten mit Teilen des Lösungsmittels erst nach einer Vorentwässerung zugesetzt.

Demgegenüber wurde nun gefunden, daß es besonders vorteilhaft ist, von Anfang an alle Umsetzungskomponenten, einschließlich aller eventuell eingesetzten Katalysatoren und/oder Cosolventien, zusammenvorzulegen und in einer Eintopfreaktion zur Umsetzung zu bringen, wobei azeotrop abdestillierendes Wasser abgeschieden wird. Auf diese Weise kann erreicht werden, daß das Umsetzungsgemisch wasserfrei wird.

Gegenstand der Erfindung ist ein Verfahren zur Herstellung von gegebenenfalls verzweigten Polyarylensulfiden aus

a) 0-100 Mol-%, vorzugsweise 50-100 Mol-% Dihalogenaromaten der Formel

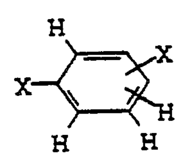

(I)

100-0 Mol-%, vorzugsweise 0-50 Mol-% Dihalogenaromaten der Formel

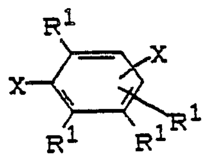

(II)

in denen

X für Chlor oder Brom steht und

$R^1$ gleich oder verschieden ist und Wasserstoff, Alkyl, Cycloalkyl, Aryl, Alkylaryl, Arylalkyl sein kann, wobei zwei zueinander orthoständige Reste $R^1$ zu einem aromatischen oder heterocyclischen Ring verknüpft sein können und immer ein Rest $R^1$ verschieden von Wasserstoff ist und

b) 0 bis 5 Mol-%, bevorzugt 0,1 bis 2,5 Mol-%, bezogen auf die Summe der Dihalogenaromaten der Formel I und II, eines Tri- oder Tetrahalogenaromaten der Formel

$$ArX_n, \qquad \text{(III)}$$

wobei

Ar ein aromatischer oder heterocyclischer Rest ist

X für Chlor oder Brom steht und

n 3 oder 4 ist und

c) Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- und Kaliumhydroxid, wobei das molare Verhältnis von (a + b) : c im Bereich von 0,85 : 1 bis 1,15 : 1, vorzugsweise 0,95 : 1 bis 1,05 : 1, liegt und

d) einem organischen Lösungsmittel, gegebenenfalls unter Mitverwendung von Katalysatoren und/oder Cosolventien, das dadurch gekennzeichnet ist, daß das molare Verhältnis von Alkalisulfiden c)

zu dem organischen Lösungsmittel d) im Bereich von 1 : 2 bis 1 : 15 liegt, und das Verfahren in einer Eintopfreaktion bei einer Reaktionszeit von bis zu 24 h, einer Reaktionstemperatur von 160 °C bis 270 °C, vorzugsweise von 170 °C bis 250 °C, gegebenenfalls unter leichtem Überdruck, durchgeführt und azeotrop abdestillierendes Wasser aus dem Umsetzungsgemisch entfernt wird.

Als Katalysatoren können für diesen Zweck in üblichen Mengen Alkalifluoride und Alkalicarboxylate eingesetzt werden. Es werden pro Mol Alkalisulfid 0,02 bis 1,0 Mol Katalysator eingesetzt.

Als Cosolventien können beispielsweise N,N-Dialkylcarbonsäureamide von $C_1$-$C_8$-aliphatischen und $C_6$-$C_{12}$-aromatischen Carbonsäuren in einer Menge von 0,02 bis 1,0 Mol, bezogen auf 1 Mol Alkalisulfid, eingesetzt werden.

$R^1$ steht in Formel II vorzugsweise für Wasserstoff, $C_1$-$C_{20}$-Alkyl, $C_5$-$C_{20}$-Cycloalkyl, $C_6$-$C_{24}$-Aryl, $C_7$-$C_{24}$-Alkylaryl oder $C_7$-$C_{24}$-Aralkyl. Weiterhin können zwei zueinander ortho-ständige Reste $R^1$ einen ankondensierten aromatischen Ring mit insgesamt 6 C-Atomen oder einen ankondensierten heterocyclischen Ring mit 5 bis 6 Ringatomen und 1 bis 3 Heteroatomen wie N, O und S bilden.

Ar steht vorzugsweise für einen aromatischen Rest mit 6 bis 24 C-Atomen oder heterocyclischen Rest mit 6 bis 24 Ringatomen, besonders bevorzugt für einen aromatischen Rest mit 6 bis 10 C-Atomen oder heterocyclischen Rest mit 6 bis 10 Ringatomen, wobei die heterocyclischen Reste bis zu 3 Heteroatome wie N, S, O enthalten können.

Alkalisulfide werden in üblichen Mengen und in üblicher Weise eingesetzt. z. B. sind Lithium-, Natrium-, Kalium- und Rubidiumsulfid geeignet, vorzugsweise Natrium- und Kaliumsulfid. Es können Alkalisulfide eingesetzt werden, die aus Hydrogensulfiden mit Alkalihydroxiden wie LiOH, NaOH und KOH regeneriert werden. In jedem Fall können Mischungen sowohl der Sulfide als auch der Hydroxide eingesetzt werden.

Erfindungsgemäß können meta- und para-Dihalogenaromaten der Formel (I) bzw. (II) eingesetzt werden. In diesem Fall kann das Verhältnis meta- zu para- Dihalogenaromaten bis zu 30 : 70 betragen.

Das Verfahren kann bei einem leichten Überdruck bis zu 8 bar ausgeführt werden.

Zur Erhaltung von thermoplastisch verarbeitbaren Polyphenylensulfiden werden besonders bevorzugt p-Dihalogenaromaten eingesetzt.

Sollen verzweigte Polyarylensulfide hergestellt werden, müssen mindestens 0,05 Mol-% eines Tri- oder Tetrahalogenaromaten der Formel (III) eingesetzt werden.

Beispiele für erfindungsgemäß einzusetzende Dihalogenaromaten der Formel (I) sind : p-Difluorbenzol, p-Dichlorbenzol, p-Dibrombenzol, p-Dijodbenzol, 1-Fluor-4-chlorbenzol, 1-Fluor-4-brombenzol, 1-Chlor-4-brombenzol, 1-Chlor-4-jodbenzol, 1-Brom-4-jodbenzol, 1,3-Difluorbenzol, 1,3-Dichlorbenzol, 1,3-Dibrombenzol, 1,3-Dijodbenzol, 1-Fluor-3-chlorbenzol, 1-Fluor-3-brombenzol, 1-Fluor-3-jodbenzol, 1-Chlor-3-brombenzol, 1-Chlor-3-brombenzol, 1-Chlor-3-jodbenzol und 1-Brom-3-jodbenzol. Sie sind allein oder im Gemisch miteinander verwendbar. Besonders bevorzugt sind 1,4-Dichlorbenzol und/oder 1,4-Dibrombenzol.

Beispiele für erfindungsgemäß einzusetzende Dihalogenaromaten der Formel (II) sind : 2,5-Dichlortoluol, 2,5-Dichlorxylol, 1-Ethyl-2,5-dichlorbenzol, 1-Ethyl-2,5-Dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol, 1-Cyclohexyl-3,5-dichlorbenzol und 1-Phenyl-3,5-difluor-benzol. Sie sind allein oder im Gemisch miteinander einsetzbar.

Beispiele für erfindungsgemäß einzusetzende Tri- bzw. Tetrahalogenaromaten der Formel (III) sind : 1,2,3-Trichlorbenzol, 1,2,4-Trichlorbenzol, 1,2,4-Tribrombenzol, 1,2,4-Trijodbenzol, 1,3,5-Trichlor-2,4,5-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachlorbiphenyl,1,3,5-Trichlor-triazin.

Erfindungsgemäß geeignete organische Lösungsmittel sind z. B. N-Alkyllactame, beispielsweise N-Methylpyrrolidon, N-Ethylpyrrolidon, N-Methylpiperidon, N-Isopropylpyrrolidon, N-Methylcaprolactam oder andere polare organische Lösungsmittel, in denen sich die Reaktionspartner zumindest teilweise lösen, und deren Siedepunkt über 200 °C liegt. Es können Lösungsmittelgemische verwendet werden.

Die Reaktionszeit kann bis zu 24 Stunden betragen, liegt vorzugsweise zwischen 2 und 18 Stunden.

Die Umsetzung wird im allgemeinen bei Atmosphärendruck durchgeführt. Eine Anwendung von Überdruck von 0,1 bar bis 8 bar kann in besonderen Fällen von Vorteil sein.

Bei der Durchführung des erfindungsgemäßen Verfahrens können alle Komponenten der Umsetzung in beliebiger Reihenfolge auf einmal zusammengegeben werden. Dann kann die Umsetzungsmischung auf eine Temperatur von 160 bis 270 °C, vorzugsweise 170 bis 250 °C erhitzt werden. Die erfindungsgemäße Umsetzung wird so als Eintopfreaktion durchgeführt. Während des Aufheizens der Umsetzungsmischung und während der Dauer der Umsetzung kann das aus der Mischung mit dem Halogenaromaten azeotrop abdestillierende Wasser, beispielsweise über einen Wasserabscheider, abgetrennt werden. Während der gesamten Dauer der Umsetzung kann auf diese Weise eventuell noch vorhandenes Wasser abgetrennt werden.

Die Aufarbeitung des Umsetzungsgemisches und die Isolierung der Polyarylensulfide kann in

bekannter Weise erfolgen.

Das Polyarylensulfid kann direkt aus der Umsetzungslösung oder erst z. B. nach Zugabe von Wasser und/oder verdünnten Säuren, nach üblichen Verfahrensweisen abgetrennt werden, beispielsweise durch Filtration oder durch Zentrifugieren. Nach der Abtrennung des Polyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lösungsmittels und eine anschließende Wäsche, wie oben beschrieben, gewonnen werden.

Die erfindungsgemäßen Polyarylensulfide können mit anderen Polymeren, wie Pigmenten und Füllstoffen, beispielsweise Graphit, Metallpulver, Glaspulver, Quarzmehl oder Glasfasern gemischt oder mit den für Polyarylensulfide üblichen Additiven, beispielsweise üblichen Stabilisatoren oder Entformungsmitteln, versetzt werden.

Im allgemeinen wird das Schmelzfließverhalten von Polyarylensulfiden nach ASTM 1238-70 bei 316 °C unter Verwendung eines 5 kg-Gewichtes gemessen und in g/10 Minuten angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\eta$ m der Polymerschmelze (in Pa · s) bei 306 °C in Abhängigkeit von der Schubspannung (in Pa · s) mit Hilfe des Instron-Rotationsviskosimeters bestimmt.

Man kann auf diese Weise die Schmelzviskosität in einem sehr weiten Bereich von $10^{-1}$ bis $10^7$ Pa · s bestimmen. In dem Instrom-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Fa. Instron; Durchmesser des Kegels und der Platte 2 cm.

Angegeben wird die Schmelzviskosität, die bei einer Schubspannung von $\tau = 10^2$ Pa gemessen wird.

Die erfindungsgemäßen Polyarylensulfide, vorzugsweise die p-Polyarylensulfide besitzen direkt nach der Isolierung aus dem Reaktionsgemisch im allgemeinen Schmelzviskositäten von $0,3 \times 10^3$ bis $5 \times 10^5$ Pa · s oder höher, vorzugsweise von $1,5 \times 10^3$ bis $10^4$ Pa · s und gute farbliche Eigenschaften. Sie können direkt durch Extrusion, Extrusionsblasen, Spritzgießen oder sonst übliche Verarbeitungstechniken zu Folien, Formkörpern oder Fasern verarbeitet werden. Diese können in üblicher Weise Verwendung finden, z. B. als Automobilteile, Armaturen, Elektroteile, z. B. Schalter, elektronische Tafeln, chemikalienresistente und verwitterungsstabile Teile und Apparate wie Pumpengehäuse und Pumpenflügelräder, Ätzbadschalen, Dichtungsringe, Teile von Büromaschinen und Fernmeldeeinrichtungen, sowie Haushaltsgeräte, Ventile, Kugellagerteile.

## Vergleichsbeispiel 1

Herstellung von Polyphenylsulfid gemäß US-PS 3 354 119

In einem mit Rührer ausgerüsteten, Autoklaven wurden 129 g Natriumsulfidtrihydrat (≙ 1 Mol $Na_2S$) und 300 g N-Methylpyrrolidon zusammengegeben. Das Gemisch wurde mit Stickstoff gespült und langsam bis auf 202 °C erwärmt. Dabei destillierten insgesamt 19 ml Wasser ab (das entspricht einem Restwassergehalt von 1,78 Mol bezogen auf Natriumsulfid). Der Ansatz wurde anschließend auf ca. 160 °C abgekühlt und 147 g p-Dichlorbenzol (≙ 1 Mol) in ca. 50 g Methylpyrrolidon hinzugefügt. Man erwärmt das Reaktionsgemisch unter einem Stickstoffvordruck von 2,5 bar in 30 Minuten auf 245 °C und hält diese Temperatur 3 Stunden. Dabei wird ein Enddruck von 14,5 bar erreicht. Nach Abkühlen auf Raumtemperatur wird ein grauer Feststoff isoliert, der anschließend mit Wasser gewaschen wird. Man trocknet bei 80 °C im Vakuum und erhält 100,3 g (≙ 93 %) Poly-p-phenylensulfid mit hellbrauner Farbe und folgenden Kenndaten: Schmelzviskosität $\eta$ m = 4,5C mPa · s (bei $\tau = 10^2$ Pa).

Eine thermoplastische Verarbeitung ist ohne Härtung nicht möglich.

## Vergleichsbeispiel 2

Wie Vergleichsbeispiel 1, jedoch wurde zusätzlich zu p-Dichlorbenzol 1,81 g 1,2,4-Trichlorbenzol (≙ 1 Mol-% bezogen auf Dichlorbenzol) eingesetzt und die Reaktion unter Normaldruck durchgeführt. 48,9 g hellgraues Produkt (≙ 45,3 % Ausbeute bezogen auf $Na_2S$) mit einer Schmelzviskosität von $\eta$ m < 1 Pa · s (bei $\tau = 10^2$ Pa) wurde isoliert.

## Beispiel 1

In einem 2 l-Dreihalskolben, der mit Thermometer, Rührer und Kolonne mit Destillatteiler ausgerüstet ist, werden unter Stickstoff 1 110 g N-Methylcaprolactam, 305,2 g Natriumsulfidhydrat (≙ 2,32 Mol), 28,0 g 50 %ige Natronlauge, 341,1 g 1,4-Dichlorbenzol (≙ 2,32 Mol) 4,21 g 1,2,4-Trichlorbenzol (1 Mol-% bezogen auf Dichlorbenzol) und 30,2 g N,N-Dimethylacetamid (15 Mol-% bezogen auf $Na_2S$) vorgelegt.

Das Umsetzungsgemisch wird langsam zum Sieden erhitzt. Aus dem destillierenden Azeotrop, bestehend aus Wasser und p-Dichlorbenzol, wird Wasser abgetrennt und p-Dichlorbenzol in das Reaktionsgefäß zurückgeführt. Nach 2 Stunden ist sowohl im Destillat als auch im Sumpf kein Wasser mehr nachweisbar. Es wird weitere 9 Stunden zum Rückfluß erhitzt und das Produkt in üblicher Weise isoliert. Man erhält 236,8 g weißes Polyarylensulfid (≙ 94,5 % Ausbeute bezogen auf $Na_2S$ Schmelzviskosität von $\eta$ m = 3,0 × $10^3$ Pa · s (bei $\tau = 10^2$ Pa)).

Beispiel 2

Analog Beispiel 1 : 1 110 g N-Methylcaprolactam, 305,2 g Natriumsulfidhydrat (≙ 2,32 Mol), 2,4 g 50 %ige Natronlauge, 341,1 g 1,4-Dichlorbenzol (≙ 2,32 Mol) und 38,05 g Natriumacetat (≙ 20 Mol-% bezogen auf $Na_2S$). Man erhält 233,4 g weißes Polyphenylensulfid (≙ 93,1 %, Schmelzviskosität von $\eta$ m = 120 Pa · s ($\tau = 10^2$ Pa)).

Beispiel 3

(Herstellung eines verzweigten Polyarylensulfids)

Analog Beispiel 1 : 1 110 g N-Methylpyrrolidon, 305,2 g Natriumsulfidhydrat (≙ 2,32 Mol), 28,0 g 50 %ige Natronlauge, 324,1 g 1,4-Dichlorbenzol (≙ 95 Mol-% bezogen auf $Na_2S$), 19,5 g 1,2,4-Trichlorbenzol (≙ 4,87 Mol-% bezogen auf 1,4-Dichlorbenzol) und 30,2 g N,N-Dimethylacetamid. Man erhält 154,8 g weißes Polyarylensulfid (≙ 61,8 % Ausbeute, Schmelzviskosität von $\eta$ m = 5,9 × $10^6$ Pa · s (bei $\tau = 10^2$ Pa)).

Beispiel 4

(Herstellung eines verzweigten Polyarylensulfids)

Analog Beispiel 2, jedoch zusätzlich 4,21 g 1,2,4-Trichlorbenzol, jedoch ohne Natriumacetat. Man erhält 232,7 g weißes Polyarylensulfid (≙ 92,8 % Ausbeute, Schmelzviskosität von $\eta$ m = 4,7 = $10^2$ Pa · s (bei $\tau = 10^2$ Pa)).

**Patentansprüche**

1. Verfahren zur Herstellung von hochmolekularen, gegebenenfalls verzweigten Polyarylensulfiden aus

a) 0 bis 100 Mol-% Dihalogenaromaten der Formel

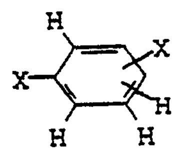

(I)

und 100 bis 0 Mol-% Dihalogenaromaten der Formel

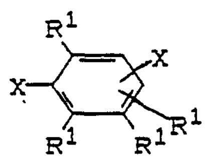

(II)

in denen

X für Chlor oder Brom steht und

$R^1$ gleich oder verschieden ist und Wasserstoff, Alkyl, Cycloalkyl, Aryl, Alkylaryl, Arylalkyl sein kann, wobei zwei zueinander orthoständige Reste $R^1$ zu einem aromatischen oder heterocyclischen Ring verknüpft sein können, und immer mindestens ein Rest $R^1$ verschieden von Wasserstoff ist, und

b) 0 bis 5 Mol-%, bezogen auf die Summe der Komponenten a) und b), eines Tri- oder Tetrahalogenaromaten der Formel

$$ArX_n \quad (III),$$

wobei

Ar ein aromatischer oder heterocyclischer Rest ist,

X für Chlor oder Brom steht und

n 3 oder 4 ist und

c) Alkalisulfiden in Form ihrer Hydrate oder wäßrigen Mischungen, gegebenenfalls zusammen mit Alkalihydroxiden, wobei das molare Verhältnis von (a + b) : c im Bereich von 0,85 : 1 bis 1,15 : 1 liegt und

d) organischem Lösungsmittel bei erhöhter Temperatur, dadurch gekennzeichnet, daß das molare Verhältnis von Alkalisulfiden c) und organischem Lösungsmittel d) im Bereich von 1 : 2 bis 1 : 15 liegt und daß das Verfahren in einer Eintopfreaktion derart durchgeführt wird, daß alle Komponenten der Umsetzung in beliebiger Reihenfolge auf einmal zugesetzt werden und vorhandenes Wasser während des Aufheizens der Umsetzungsmischung und während der gesamten Dauer der Umsetzung durch azeotrope Destillation abgetrennt wird.

2. Verfahren nach Anspruch 1, dadurch gekennzeichnet, daß die Reaktionszeit bis zu 24 Stunden beträgt.

3. Verfahren nach Ansprüchen 1 und 2, dadurch gekennzeichnet, daß bei Temperaturen von 170 °C bis 270 °C umgesetzt wird.

4. Verfahren nach Ansprüchen 1 bis 3, dadurch gekennzeichnet, daß als organisches Lösungsmittel N-Methylpyrrolidon-(2) oder N-Methyl-ε-caprolactam eingesetzt wird.

5. Verfahren nach Ansprüchen 1 bis 4, dadurch gekennzeichnet, daß Alkalicarboxylate oder Alkalifluoride als Katalysatoren eingesetzt werden.

6. Verfahren nach Ansprüchen 1 bis 5, dadurch gekennzeichnet, daß N,N-Dialkylcarbonsäureamide als Cosolventien eingesetzt werden.

7. Verfahren nach Ansprüchen 1 bis 6, dadurch gekennzeichnet, daß 1,4-Dichlorbenzol als Dihalogenaromat der Formel I eingesetzt wird.

8. Verfahren nach Ansprüchen 1 bis 7, dadurch gekennzeichnet, daß man 1,2,4-Trichlorbenzol als Polyhalogenaromat der Formel (III) einsetzt.

**Claims**

1. Process for the production of high molecular weight, optionally branched polyarylene sulphides from

a) 0 to 100 mol-% of dihalogen aromatic compounds of the formula

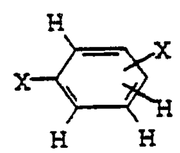

(I)

and 100 to 0 mol % of dihalogen aromatic compounds of the formula

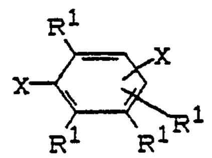

(II)

in which

X represents chlorine or bromine and

$R^1$ is identical or different and can be hydrogen, alkyl, cycloalkyl, aryl, alkylaryl or arylalkyl, it being possible for two radicals $R^1$ which are in an ortho position to each other to be linked to form an aromatic or heterocyclic ring, and at least one radical $R^1$ is always different from hydrogen, and

b) 0 to 5 mol-%, based on the sum of components a) and b), of a tri- or tetrahalogen aromatic compound of the formula

$$ArX_n \qquad (III),$$

wherein

Ar is an aromatic or heterocyclic radical,

X represents chlorine or bromine and

n is 3 or 4 and

c) alkali metal sulphides in the form of their hydrates or aqueous mixtures, optionally together with alkali metal hydroxides, the molar ratio of (a + b) : c being in the range 0.85 : 1 to 1.15 : 1 and

d) an organic solvent, at an elevated temperature, characterised in that the molar ratio of alkali metal sulphides c) and the organic solvent d) is in the range 1 : 2 to 1 : 15 and in that the process is carried out in a one-vessel reaction in such a manner that all the components of the reaction are added at once in

any desired order and during the heating-up of the reaction mixture and throughout the whole duration of the reaction any water present is separated off by azeotropic distillation.

2. Process according to Claim 1, characterised in that the reaction time is up to 24 hours.

3. Process according to Claims 1 and 2, characterised in that the reaction is carried out at temperatures of 170 °C to 270 °C.

4. Process according to Claims 1 to 3, characterised in that N-methyl-2-pyrrolidone or N-methyl-ε-caprolactam is used as the organic solvent.

5. Process according to Claims 1 to 4, characterised in that alkali metal carboxylates or alkali metal fluorides are used as catalysts.

6. Process according to Claims 1 to 5, characterised in that N,N-dialkylcarboxylic acid amides are used as co-solvents.

7. Process according to Claims 1 to 6, characterised in that 1,4-dichlorobenzene is used as the dihalogen aromatic compound of the formula I.

8. Process according to Claims 1 to 7, characterised in that 1,2,4-trichlorobenzene is used as the polyhalogen aromatic compound of the formula (III).

**Revendications**

1. Procédé de préparation de polysulfures d'arylène, éventuellement ramifiés, de masse moléculaire élevée à partir

a) de 0 à 100 % molaire d'hydrocarbures aromatiques dihalogénés de formule

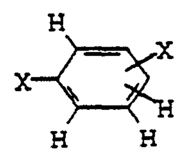

(I)

et de 100 à 0 % molaire d'hydrocarbures aromatiques dihalogénés de formule

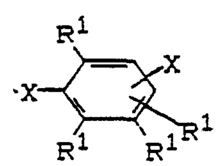

(II)

dans lesquelles

X représente du chlore ou du brome et

$R^1$ est identique ou différent et peut être l'hydrogène, un alkyle, un cycloalkyle, un aryle, un alkylaryle, un arylalkyle, auquel cas deux restes $R^1$ en position ortho l'un par rapport à l'autre peuvent s'unir en un noyau aromatique ou hétérocyclique et au moins un reste $R^1$ est toujours différent de l'hydrogène,

b) de 0 à 5 % molaire, par rapport à la somme des constituants a) et b), d'un hydrocarbure aromatique tri- ou tétrahalogéné de formule

$$ArX_n \qquad (III),$$

où

Ar est un reste aromatique ou hétérocyclique,

X représente du chlore ou du brome et

n est 3 ou 4,

c) de sulfures alcalins sous forme de leurs hydrates ou de mélanges aqueux, le cas échéant avec des hydroxydes alcalins, auquel cas le rapport molaire de (a + b) : c se situe dans la plage de 0,85 : 1 à 1,15 : 1 et

d) d'un solvant organique, à température accrue, caractérisé en ce que le rapport molaire des sulfures alcalins c) et du solvant organique d) se situe dans la plage de 1 : 2 à 1 : 15 et que le procédé est réalisé au cours d'une réaction en une phase de telle façon que tous les constituants de la réaction soient chargés en une fois dans un ordre quelconque et que l'eau présente soit séparée par distillation azéotropique au cours du chauffage du mélange réactionnel et pendant toute la durée de la réaction.

2. Procédé selon la revendication 1, caractérisé en ce que la durée de réaction s'élève jusqu'à 24 heures.

3. Procédé selon les revendications 1 et 2, caractérisé en ce que la réaction est conduite à des températures de 170 °C à 270 °C.

4. Procédé selon les revendications 1 à 3, caractérisé en ce que de la N-méthylpyrrolidone-(2) ou du

N-méthyl-ε-caprolactame est employé comme solvant organique.

5. Procédé selon les revendications 1 à 4, caractérisé en ce que des carboxylates alcalins ou des fluorures alcalins sont utilisés comme catalyseurs.

6. Procédé selon les revendications 1 à 5, caractérisé en ce que des N,N-dialkylamides sont utilisés comme cosolvants.

7. Procédé selon les revendications 1 à 6, caractérisé en ce que du 1,4-dichlorobenzène est utilisé comme hydrocarbure aromatique dihalogéné de formule I.

8. Procédé selon les revendications 1 à 7, caractérisé en ce qu'on utilise du 1,2,4-trichlorobenzène comme hydrocarbure aromatique polyhalogéné de formule (III).